(19) Europäisches Patentamt / European Patent Office / Office européen des brevets

(11) **EP 3 862 411 B1**

(12) **FASCICULE DE BREVET EUROPEEN**

(45) Date de publication et mention
de la délivrance du brevet:
**09.03.2022 Bulletin 2022/10**

(21) Numéro de dépôt: **20215135.3**

(22) Date de dépôt: **17.12.2020**

(51) Classification Internationale des Brevets (IPC):
**C10L 3/08** (2006.01)    **C10L 3/10** (2006.01)

(52) Classification Coopérative des Brevets (CPC):
**C10L 3/08; C10L 3/101; C10L 3/104;**
C10L 2200/0469; C10L 2290/02; C10L 2290/04;
C10L 2290/06; C10L 2290/143; C10L 2290/145;
C10L 2290/24; C10L 2290/26; C10L 2290/542;
C10L 2290/548; C10L 2290/562; C10L 2290/58;
(Cont.)

(54) **TRAITEMENT DES GAZ RÉSIDUELS ISSUS D'UNE ÉPURATION DE BIOGAZ**

BEHANDLUNG VON ABGASEN AUS EINER BIOGASAUFBEREITUNG

TREATMENT OF RESIDUAL GAS FROM PURIFICATION OF BIOGAS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.02.2020 FR 2001254**

(43) Date de publication de la demande:
**11.08.2021 Bulletin 2021/32**

(73) Titulaire: **Prodeval SAS**
**26300 Chateauneuf sur Isère (FR)**

(72) Inventeurs:
• **PAOLOZZI, Sébastien**
**26300 SAINT-VINCENT-LA-COMMANDERIE (FR)**
• **PEYRAT, Eric**
**31100 TOULOUSE (FR)**

(74) Mandataire: **Argyma**
**14 Boulevard de Strasbourg**
**31000 Toulouse (FR)**

(56) Documents cités:
**EP-A2- 1 191 215       DE-A1-102010 006 649
DE-A1-102010 050 214**

**EP 3 862 411 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)
C10L 2290/60

## Description

### Domaine technique

L'invention concerne le domaine de la production de biométhane et plus particulièrement un système et un procédé de traitement des gaz résiduels issus de l'épuration du biogaz en biométhane.

L'invention vise notamment à permettre la valorisation énergétique par combustion du méthane contenu dans les gaz résiduels, notamment afin de réduire la teneur en méthane des gaz rejetés dans l'atmosphère à une valeur conforme aux normes et seuils en vigueurs.

### Etat de la technique

Selon la norme NF ISO 20675 le biogaz est défini comme étant un gaz produit par digestion anaérobie de matières organiques, par gazéification de la biomasse ou par conversion d'électricité en gaz à partir de sources issues de biomasse, sans épuration ou purification complémentaire. Le biogaz est principalement composé de méthane et de dioxyde de carbone et/ou d'hydrogène et/ou de monoxyde de carbone et/ou d'hydrocarbures plus lourds possédant entre deux et six atomes de carbone.

Ce biogaz peut être utilisé de diverses manières. Ainsi, par exemple, il est connu de stocker le biogaz dans un gazomètre, de l'utiliser comme carburant dans un moteur ou une turbine pour produire de l'énergie électrique, de le brûler dans une chaudière pour produire de l'énergie thermique ou bien encore de l'épurer dans une unité d'épuration pour produire du biométhane qui peut ensuite être soit injecté sur un réseau de transport ou de distribution de gaz naturel, soit être utilisé comme carburant pour véhicule, appelé Gaz Naturel biologique pour Véhicule ou BioGNV.

Dans une unité d'épuration, le rendement épuratoire, également appelé rendement méthane, est défini comme le rapport du débit de méthane sortant dans le biométhane sur le débit de méthane entrant dans le biogaz. Le rendement épuratoire est considéré comme élevé lorsqu'il est supérieur ou égal à 99 % et faible lorsqu'il est inférieur à 90 %. De manière connue, l'unité d'épuration permet d'appauvrir le biogaz en dioxyde de carbone de sorte à augmenter la proportion de méthane. Par exemple, il est connu d'augmenter la proportion de méthane jusqu'à une valeur de l'ordre de 97 % afin de former du biométhane conforme aux spécifications pour l'injection sur un réseau de gaz domestique ou bien pour son utilisation en tant carburant véhicule (bioGNV).

L'épuration du biogaz a pour effet de produire des gaz dits « résiduels » dont la composition dépend du rendement épuratoire de l'unité d'épuration. Ainsi, plus le rendement épuratoire est élevé, moins la composition des gaz résiduels comprend de méthane mais plus les coûts d'investissement et de fonctionnement de l'unité d'épuration sont élevés. Inversement, moins le rendement épuratoire est élevé, plus la composition des gaz résiduels comprend de méthane et plus les coûts d'investissement et de fonctionnement de l'unité d'épuration sont faibles.

La plupart du temps, les unités d'épuration fonctionnent à haut rendement pour, d'une part, maximiser la production de biométhane et, d'autre part, diminuer la teneur en méthane dans les gaz résiduels afin de permettre leur rejet à l'atmosphère. La réglementation en vigueur dans les différents pays fixe la teneur maximale en méthane dans les gaz résiduels rejetés dans l'atmosphère. A titre d'exemple, le seuil de rejet est d'environ à 2% vol. de méthane ($CH_4$) en France et 0,2% vol. en Allemagne, ce taux ayant vocation à baisser avec le temps.

Lorsque les gaz résiduels en sortie de l'unité d'épuration ont une teneur supérieure au seuil autorisé, il est nécessaire de mettre en place des procédés complémentaires de traitement des gaz résiduels afin d'abaisser leur teneur en méthane. Ce résultat peut être obtenu par exemple au moyen de procédés d'oxydation du méthane, de piégeage du méthane, de liquéfaction du dioxyde de carbone ou de combustion du méthane.

Les procédés d'oxydation du méthane sont réalisés dans des réacteurs catalytiques ou encore des brûleurs régénératifs, de type RTO pour « Regenerative Thermal Oxidizer » en langue anglaise. Ces procédés constituent la solution la plus simple et la plus économique pour respecter les seuils de rejet mais ils présentent l'inconvénient de ne pas permettre de valoriser le méthane contenu dans les gaz résiduels (perte).

Les procédés de piégeage du méthane sont réalisés sur un média adsorbant, de type PSA pour Pressure Swing Adsorption en langue anglaise ou adsorption par inversion de pression. Afin d'être recyclé, le méthane piégé est récupéré puis remélangé avec le flux principal de biogaz en entrée de l'unité d'épuration. Toutefois, le coût de récupération de ce méthane résiduel peut s'avérer nettement supérieur à sa valeur marchande, ce qui rend l'investissement non rentable d'un point de vue économique.

Les procédés de liquéfaction du dioxyde de carbone ($CO_2$) avec séparation du méthane, qui reste incondensable aux conditions de température et de pression de liquéfaction du dioxyde de carbone. Le méthane incondensable est récupéré et recyclé en entrée de l'unité d'épuration du biogaz afin d'être valorisé. Ce procédé nécessite une infrastructure complexe et qui peut s'avérer coûteuse, même si la vente du dioxyde de carbone liquide produit peut permettre dans certains cas de financer les coûts d'investissement et de fonctionnement de l'unité de liquéfaction.

Les procédés de combustion des gaz résiduels sont réalisés par exemple dans un module de cogénération permettant de produire de l'électricité et de la chaleur. Toutefois, la bonne combustion du méthane dépend du taux de méthane contenu dans les gaz résiduels. Notamment, plus le taux de méthane est élevé et plus la combustion sera efficace pour brûler le méthane. Par exemple, nombre de modules de cogénération existants permettent la combustion d'un flux de gaz dès lors que ledit flux comporte une fraction volumique minimale de méthane, par exemple de 40 %, et pour laquelle une quantité d'air minimale est à apporter afin de réaliser la combustion efficacement. La valeur de la fraction volumique minimale en méthane est une donnée fournie par le constructeur du module de combustion. De même, la quantité d'air minimale à apporter pour permettre la combustion d'un flux comportant au moins la fraction volumique minimale en méthane est donnée par le constructeur sous la forme d'une valeur numérique correspondant au ratio du volume de comburant (dioxygène) nécessaire pour permettre la combustion d'un volume de combustible (méthane) donné. Ce ratio est déterminé à partir de la stœchiométrie de la réaction de combustion et d'un excès de comburant que l'on souhaite apporté. Il est donc variable selon le combustible.

Un problème se pose lorsque la proportion de méthane dans le flux de gaz résiduel est faible, notamment inférieure à 40 %, car dans ce cas la combustion pourrait s'avérer incomplète, voire impossible, car étant inférieure à la valeur de la fraction volumique minimale en méthane.

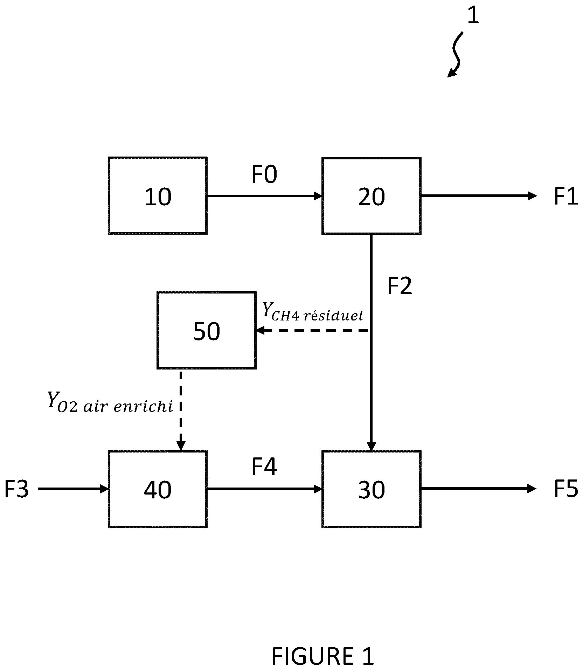

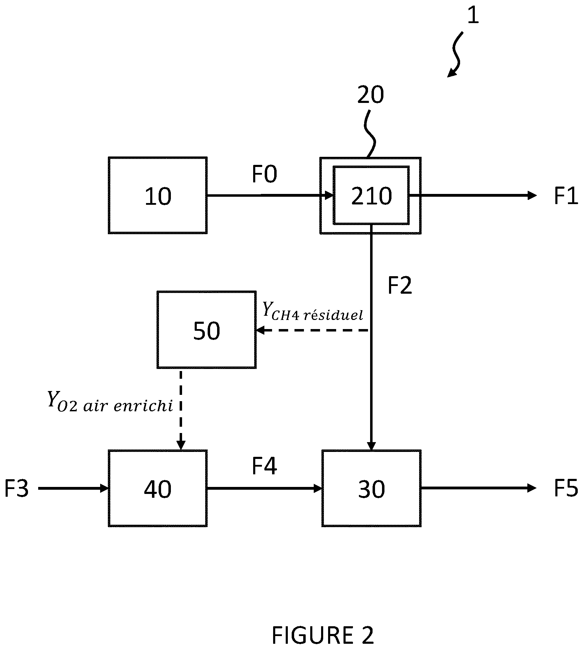

Le document DE 10 2010 006 649 A1 (figure 1) divulgue un système de production de biométhane comportant une chambre de combustion permettant de brûler le méthane contenu dans un flux de dioxyde de carbone issu d'une centrifugeuse à gaz (4 -> 7) et le méthane contenu dans un flux de gaz résiduels issu d'une séparation pneumatique des gaz par membrane (5 -> 7) pour obtenir un flux sortant de dioxyde de carbone pur à 99,5 %. Les gaz résiduels sont brulés avec un agent oxydant comportant du dioxygène, amené via une ligne d'oxydant 25 (figure 2). Cependant, dans ce système, la combustion n'est pas assurée, même avec une telle ligne d'agent oxydant. Pour cela, afin de favoriser la combustion si nécessaire, une partie du gaz brut issu du fermenteur, qui a un pouvoir calorifique supérieur aux gaz résiduels, est dérivé via une conduite 22 jusqu'à la chambre de combustion 26 ([0031]). Une telle combustion non contrôlée et réalisée par l'ajout direct de méthane issu du fermenteur, a pour effet de diminuer significativement le rendement du système, ce qui présente un inconvénient important.

Il existe donc le besoin d'une solution simple, efficace et fiable permettant de remédier au moins en partie à ces inconvénients.

**Exposé de l'invention**

L'invention a donc pour but de proposer un système et un procédé de production de biométhane par épuration permettant un traitement efficace des gaz résiduels. Notamment, l'un des buts de l'invention est donc de permettre la combustion du méthane contenu dans les gaz résiduels de manière simple, fiable, efficace et optimisée.

A cette fin, l'invention concerne tout d'abord un système de production de biométhane comportant :

- au moins un module de production de biogaz,
- au moins une unité d'épuration apte à séparer le flux de biogaz provenant de l'au moins un module de production de biogaz en un flux de biométhane, contenant de préférence au moins 90 % de méthane, et un flux de gaz résiduels contenant une proportion de méthane,
- au moins un module de combustion des gaz résiduels caractérisé, d'une part, par un facteur dit « de méthane » indiquant la fraction volumique minimale de méthane que doit contenir ledit flux de gaz résiduels pour permettre la combustion du méthane qu'il contient et, d'autre part, par un facteur dit « de dioxygène » indiquant la quantité minimum de dioxygène à apporter pour pouvoir brûler lesdits gaz résiduels caractérisés par ledit facteur de méthane,
- au moins un module de fourniture apte à fournir un flux gazeux comportant du dioxygène à l'au moins un module de combustion des gaz résiduels,

ledit système étant remarquable en ce que :

- il comprend un module de contrôle apte à déterminer la fraction volumique de méthane du flux de gaz résiduels, à calculer un taux d'enrichissement en dioxygène d'un flux d'air permettant de réaliser la combustion du méthane contenu dans lesdits gaz résiduels dans le module de combustion à partir de la fraction volumique de méthane du flux de gaz résiduels déterminée en respectant le facteur de dioxygène et le facteur de méthane du module de combustion, et à envoyer le taux d'enrichissement en dioxygène calculé à l'au moins un module de fourniture,
- l'au moins un module de fourniture est apte à générer un flux gazeux comportant une proportion de dioxygène égale au taux d'enrichissement en dioxygène reçu du module de contrôle.

Le système selon l'invention permet de calculer la quantité précise de dioxygène à fournir pour réaliser avec certitude la combustion du méthane des gaz résiduels dans le module de combustion. Il n'est donc plus nécessaire d'injecter du méthane issu directement du fermenteur afin d'assurer la combustion, ce qui améliore le rendement du système tout en limitant les rejets de méthane dans l'atmosphère à un niveau inférieur aux normes en vigueur. La prise en compte des facteurs de dioxygène et de méthane fournis par le constructeur du module de combustion permettent de s'assurer de la bonne combustion des gaz résiduels afin d'éliminer le méthane contenu dans lesdits gaz résiduels. En outre, le calcul de la quantité nécessaire et suffisante de dioxygène à fournir pour réaliser avec certitude la combustion du méthane des gaz résiduels permet d'injecter suffisamment de dioxygène dans le module de combustion afin d'éviter l'utilisation de méthane additionnel, par exemple issu directement d'un fermenteur, ce qui évite de dégrader le rendement du système. Une solution évidente aurait été d'injecter systématiquement du dioxygène pur mais le coût d'achat ou de production du dioxygène pur pouvant s'avérer significativement élevé, le fonctionnement du système serait dans ce cas particulièrement onéreux.

Selon un aspect de l'invention, afin de générer le flux gazeux comportant du dioxygène à la valeur du taux d'enrichissement en dioxygène, le module de fourniture est apte à prélever un flux d'air atmosphérique et à enrichir ledit flux d'air en dioxygène à la valeur du taux d'enrichissement en dioxygène reçu.

Dans une première forme de réalisation, le module de fourniture est apte à enrichir le flux d'air atmosphérique en dioxygène par séparation membranaire.

Avantageusement, le module de fourniture est apte à extraire sous vide les perméats enrichis en dioxygène lors de la séparation membranaire, par exemple à l'aide d'une pompe à vide permettant d'aspirer le gaz rapide qu'est le dioxygène lors de la séparation membranaire pour constituer le flux de perméats.

Dans une deuxième forme de réalisation, le module de fourniture est apte à enrichir le flux d'air atmosphérique en dioxygène par adsorption, de préférence réalisée par un module de type PSA (Pressure Swing Adsorption ou adsorption par inversion de pression) ou VPSA (Vacuum Pressure Swing Adsorption ou adsorption par inversion de pression à vide).

Dans une troisième forme de réalisation, le module de fourniture est apte à calculer une quantité de dioxygène à partir du taux d'enrichissement en dioxygène reçu, par exemple à partir d'une courbe ou d'une table de correspondance prédéterminées, à prélever la quantité de dioxygène calculée dans un conduit de fourniture de dioxygène pur et à diluer la quantité de dioxygène prélevée dans le flux d'air atmosphérique afin d'obtenir le flux d'air enrichi au taux d'enrichissement en dioxygène.

Dans ce cas, le conduit de fourniture de dioxygène pur peut être reliée à un réservoir de stockage de dioxygène pur ou bien être connecté à une installation produisant du dioxygène pur, par exemple du dioxygène fatal, comme sous-produit d'activité industrielle.

L'invention a également pour objet un procédé de traitement des gaz résiduels issus de l'épuration du méthane à partir d'un système tel que présenté précédemment, ledit procédé comprenant les étapes de :

- production de biogaz par l'au moins un module de production,
- séparation, par l'au moins une unité d'épuration, du biogaz produit en un flux de biométhane, de préférence contenant au moins 90 % de méthane, et un flux de gaz résiduels contenant une proportion de méthane,
- détermination par le module de contrôle de la fraction volumique de méthane du flux de gaz résiduels,
- calcul par le module de contrôle du taux d'enrichissement en dioxygène d'un flux d'air permettant de réaliser la combustion du méthane contenu dans lesdits gaz résiduels dans le module de combustion à partir de la fraction volumique de méthane du flux de gaz résiduels déterminée en respectant le facteur de dioxygène et le facteur de méthane du module de combustion,
- envoi par le module de contrôle du taux d'enrichissement en dioxygène calculé à l'au moins un module de fourniture,
- génération, de préférence à partir d'un flux d'air atmosphérique, par l'au moins un module de fourniture d'un flux gazeux comportant une proportion de dioxygène égale au taux d'enrichissement en dioxygène reçu,
- fourniture par l'au moins un module de fourniture du flux gazeux généré au module de combustion, et
- combustion, par le module de combustion, du flux de gaz résiduels à partir du flux gazeux fourni.

Avantageusement, le calcul du taux d'enrichissement en dioxygène est réalisé en calculant tout d'abord le taux d'inertes maximal admissible dans le mélange en entrée du module de combustion, qui correspond à la quantité de constituants ne participant pas en tant que réactifs à la réaction de combustion, puis la fraction volumique minimale de méthane admissible par le module de combustion en supposant que l'air comburant ne contient que du dioxygène (oxycombustion à 100 % de dioxygène). En effet, l'un des buts de l'invention est de limiter le taux d'inertes dans le mélange comburant/carburant du moteur en, connaissant la proportion de méthane à brûler dans les gaz résiduels, calculant la proportion de dioxygène dans le flux de comburant à injecter dans le moteur.

Le taux d'inertes maximal admissible $Y_{inertes}$ est calculé selon la formule suivante :

[Math. 1]

$$Y_{inertes} = \frac{1 + Y_{CH4\,mini\,constructeur} \times \left[2\lambda \times \left(\frac{1 - Y_{O2\,air}}{Y_{O2\,air}}\right) - 1\right]}{1 + 2\lambda \times \left(\frac{Y_{CH4\,mini\,constructeur}}{Y_{O2\,air}}\right)}$$

où $Y_{CH4\,mini\,constructeur}$ est le facteur de méthane (i.e. la fraction volumique minimale en méthane dans le biogaz permettant de faire fonctionner le module de combustion donnée par le constructeur du module de combustion et exprimée en fraction volumique), $Y_{O2\,air}$ correspond à la fraction volumique en dioxygène dans l'air atmosphérique soit 0,209 (exprimée en fraction volumique) et $\lambda$, dit « lambda volumique », est le facteur de dioxygène (donnée propre au module de combustion fournie par le constructeur qui exprime le rapport entre le volume de dioxygène fourni à la combustion d'un volume de méthane et le volume de dioxygène nécessaire à la combustion stœchiométrique du même volume de méthane. Si $\lambda$ = 1 alors la réaction est stœchiométrique, si $\lambda$ > 1 alors il y a excès d'oxygène dans le mélange pour permettre la combustion).

La fraction volumique minimale en méthane admissible par le module de combustion en supposant que l'air comburant ne contient que du dioxygène $Y_{CH4\,mini\,oxycombustion}$ est calculée selon la formule suivante :

[Math. 2]

$$Y_{CH4\,mini\,oxycombustion} = \frac{(1 - Y_{inertes})}{(2\lambda \times Y_{inertes} + 1)}$$

La valeur du taux d'enrichissement en dioxygène de l'air comburant nécessaire pour brûler le méthane du flux de gaz résiduels est calculée selon la formule suivante :

[Math. 3]

$$Y_{O2\,air\,enrichi} = \frac{2\lambda \times Y_{CH4\,résiduel} \times (Y_{inertes} - 1)}{1 - Y_{inertes} - Y_{CH4\,résiduel} \times (2\lambda + 1)}$$

où $Y_{CH4}$ résiduel correspond à la fraction volumique de méthane du flux de gaz résiduels en entrée du module de combustion.

**Description des figures**

D'autres caractéristiques et avantages de l'invention apparaîtront encore à la lecture de la description qui va suivre. Celle-ci est purement illustrative et doit être lue en regard des dessins annexés sur lesquels :

[Fig. 1] La figure 1 est un schéma bloc fonctionnel d'un exemple de système selon l'invention.
[Fig. 2] La figure 2 illustre schématiquement une première forme de réalisation du système selon l'invention.
[Fig. 3] La figure 3 illustre schématiquement une deuxième forme de réalisation du système selon l'invention.
[Fig. 4] La figure 4 illustre schématiquement un mode de réalisation du procédé selon l'invention.
[Fig. 5] La figure 5 illustre schématiquement un exemple de courbe donnant la proportion de dioxygène dans le flux d'air enrichi comburant en fonction de la proportion de méthane dans le flux de gaz résiduels à brûler.

**Description détaillée d'au moins un mode de réalisation**

Dans le présent document, on entend par « lambda volumique », noté $\lambda$ et appelé « facteur de dioxygène », le rapport entre le volume d'oxygène fourni à la combustion d'un volume de méthane et le volume d'oxygène nécessaire à la combustion stœchiométrique du même volume de méthane. Pour la réaction de combustion du méthane le rapport volumique stœchiométrique $O_2/CH_4$ est égal à 2 (il faut deux volumes de dioxygène pour brûler un volume de méthane). Si $\lambda$ = 1, alors la réaction est stœchiométrique et le rapport $O_2/CH_4$ est égal à 2. Si $\lambda$ > 1, alors il faut un excès d'oxygène proportionnel à $\lambda$ pour permettre la combustion du méthane. Par exemple, pour $\lambda$ = 1,4 alors le rapport $O_2/CH_4$ = 1,4 x

2 = 2,8 et il faut alors 2,8 volumes de dioxygène pour brûler un volume de méthane.

Par ailleurs, la norme NF ISO 20675 de septembre 2018 donne les définitions suivantes qui sont utilisées dans le présent document :

- le « biogaz » est un gaz produit par digestion anaérobie de matières organiques, par gazéification de la biomasse ou par conversion d'électricité en gaz à partir de sources issues de biomasse, sans épuration ou purification complémentaire. Le biogaz est principalement composé de méthane et de dioxyde de carbone et/ou d'hydrogène et/ou de monoxyde de carbone et/ou d'hydrocarbures plus lourds possédant entre deux et six atomes de carbone ;

- le « bio-syngaz » est un type de biogaz composé principalement de monoxyde de carbone et d'hydrogène, obtenu par gazéification d'une biomasse ;

- la « biomasse » est une matière d'origine biologique, à l'exclusion des matières emprisonnées dans des formations géologiques et/ou transformées en matières fossilisées. La biomasse est une matière organique d'origine végétale ou animale, comprenant entre autres les cultures énergétiques dédiées, les cultures agricoles et arbres, les résidus de cultures vivrières, fourragères et de plantes textiles, les résidus de plantes aquatiques, algues, sylviculture et bois, les sous-produits organiques agricoles, animaux et de traitement, les déchets et résidus organiques agricoles, municipaux et industriels (dans des décharges ou non), les boues, les eaux usées et les autres matières organiques non fossilises ;

- le « biométhane » est un gaz riche en méthane, possédant des propriétés similaires au gaz naturel, dérivé de biogaz produit par digestion anaérobie, gazéification ou conversion d'électricité en gaz ;

- le « biométhane injectable » est un biogaz épuré à une qualité équivalente au gaz naturel, adapté pour alimenter le réseau public et satisfaisant aux exigences légales relatives à l'alimentation du réseau public ;

- la « gazéification » est un procédé convertissant la matière biogénique ou d'origine fossile en monoxyde de carbone et en hydrogène. Il est réalisé en exposant la matière à des températures élevées (>700 °C), sans combustion, avec une quantité contrôlée d'oxygène et/ou de vapeur. Normalement, la gazéification est suivie par une conversion en méthane et dioxyde de carbone (méthanation). Le mélange gazeux de monoxyde de carbone et d'hydrogène résultant est appelé syngaz. Lorsque la charge d'alimentation de la gazéification est de la biomasse, le mélange gazeux résultant est appelé bio-syngaz.

On a représenté à la figure 1 un exemple schématique de système selon l'invention permettant la production d'un flux de biométhane tout en limitant, voire en supprimant quasi-intégralement la quantité de rejet de méthane dans l'atmosphère, i.e. à l'exception de quelques traces.

Dans cet exemple, le système 1 comprend un module de production 10 de biogaz, une unité d'épuration 20, un module de combustion 30 des gaz résiduels, un module de fourniture 40 et un module de contrôle 50.

Module de production 10

Le module de production 10 permet de fabriquer un flux de biogaz F0, par exemple à partir de la fermentation de la partie fermentescible d'une biomasse, par gazéification ou pyrolyse de matière organique d'origine renouvelable (bois, paille, etc.) ou non renouvelable (déchets plastiques ou autre).

Le module de production 10 peut par exemple se présenter sous la forme d'un fermenteur ou méthaniseur. Un tel module de production 10 de biogaz étant connu en soi, il ne sera pas davantage détaillé ici.

Unité d'épuration 20

L'unité d'épuration 20 est apte à séparer le flux de biogaz F0 provenant du module de production 10 de biogaz en un flux de biométhane F1, contenant de préférence au moins 90 % de méthane, et un flux de gaz résiduels F2 contenant une proportion de méthane, par exemple comprise entre 10 et 30 % de méthane. L'unité d'épuration 20 peut comporter un étage de séparation de type membranaire ou tout autre moyen de séparation connu. Là encore, une telle unité d'épuration 20 étant connue en soi, elle ne sera pas davantage détaillée ici.

Module de combustion 30

Le module de combustion 30 des gaz résiduels comprend un moteur permettant de brûler les gaz résiduels issus de l'unité d'épuration 20. Le module de combustion 30 peut par exemple se présenter sous la forme d'un module de cogénération permettant de brûler des gaz afin de produire de l'électricité et de la chaleur.

Le module de combustion 30 est caractérisé, d'une part, par un facteur dit « de méthane » et, d'autre part, un facteur dit « de dioxygène » λ. Le facteur de méthane indique la fraction volumique minimale de méthane que doit contenir le flux de gaz résiduels F2 pour permettre la combustion du méthane qu'il contient par le module de combustion 30. Comme indiqué ci-avant, le facteur de dioxygène λ exprime le rapport entre le volume d'oxygène fourni à la combustion d'un volume de méthane et le volume d'oxygène nécessaire à la combustion stœchiométrique du même volume de méthane.

De manière connue en soi, le module de combustion 30 est apte à adapter le débit du flux de comburant entrant en fonction du débit du flux de carburant (ou combustible) entrant.

Module de fourniture 40

Le module de fourniture 40 est apte à fournir au module de combustion 30 un flux gazeux de comburant comportant du dioxygène à un taux prédéterminé par le module de contrôle 50. A cette fin, le module de fourniture 40 est apte à prélever un flux d'air atmosphérique F3, à enrichir ledit flux d'air atmosphérique F3 en dioxygène à la valeur d'un taux d'enrichissement en dioxygène reçu du module de contrôle 50 et à fournir le flux ainsi enrichi F4, constituant un comburant, au module de combustion 30.

Dans une forme de réalisation, le module de fourniture 40 est apte à enrichir en dioxygène le flux d'air atmosphérique F3 prélevé par séparation membranaire, de préférence par extraction sous vide des perméats enrichis en dioxygène.

Dans une autre forme de réalisation, le module de fourniture 40 est apte à enrichir le flux d'air atmosphérique F3 en dioxygène par adsorption, de préférence de type PSA (Pressure Swing Adsorption ou adsorption par inversion de pression) ou VPSA (Vacuum Pressure Swing Adsorption ou adsorption par inversion de pression à vide).

Dans une autre forme de réalisation, le module de fourniture 40 est apte à enrichir le flux d'air atmosphérique F3 en dioxygène en diluant du dioxygène pur dans ledit flux d'air atmosphérique F3.

Module de contrôle 50

Le module de contrôle 50 est apte à déterminer la fraction volumique de méthane, notée $Y_{CH4}$ résiduel, du flux de gaz résiduels F2 circulant entre l'unité de séparation 20 et le module de combustion 30.

Le module de contrôle 50 est apte à calculer un taux d'enrichissement en dioxygène, noté $Y_{O2\ air\ enrichi}$, d'un flux d'air permettant de réaliser la combustion du méthane contenu dans le flux de gaz résiduels F2 dans le module de combustion 30. Ce taux d'enrichissement en dioxygène $Y_{O2\ air\ enrichi}$ est calculé à partir de la fraction volumique de méthane du flux de gaz résiduels F2 déterminée par le module de contrôle 50 en respectant le facteur de dioxygène et le facteur de méthane du module de combustion 30.

Afin de calculer le taux d'enrichissement en dioxygène $Y_{O2\ air\ enrichi}$, le module de contrôle 50 est apte à calculer le taux d'inertes maximal admissible dans le mélange en entrée du module de combustion 30, noté $Y_{inertes}$, qui correspond à la quantité de constituants ne participant pas en tant que réactifs à la réaction de combustion, puis la fraction volumique minimale en méthane admissible par le module de combustion en supposant que l'air comburant ne contient que du dioxygène (oxycombustion à 100 % de dioxygène), notée $Y_{CH4\ mini\ constructeur}$.

En effet, limiter le taux d'inertes dans le mélange comburant/carburant du module de combustion 30 permet de s'assurer de la bonne combustion du mélange lorsque la proportion d'air enrichi en dioxygène est suffisante pour brûler la proportion de méthane contenue dans les gaz résiduels. Si le taux d'inertes est supérieur à un seuil maximal donné, par exemple 76, 1 %, alors le mélange comburant/carburant ne brulera pas efficacement et le rendement du module de combustion 30 s'en trouvera significativement affecté. Le seuil maximal donné d'inertes, par exemple de 76, 1 %, est propre à chaque équipement et peut être déterminé avec les formules ci-après.

Plus précisément, le module de contrôle 50 est apte à calculer le taux d'inertes maximal admissible $Y_{inertes}$ selon la formule suivante :

[Math. 4]

$$Y_{inertes} = \frac{1 + Y_{CH4\ mini\ constructeur} \times \left[ 2\lambda \times \left( \frac{1 - Y_{O2\ air}}{Y_{O2\ air}} \right) - 1 \right]}{1 + 2\lambda \times \left( \frac{Y_{CH4\ mini\ constructeur}}{Y_{O2\ air}} \right)}$$

où $Y_{CH4\ mini\ constructeur}$ correspond à la fraction volumique minimale de méthane dans le biogaz permettant de faire fonctionner le module de combustion 30 donnée par le constructeur du module de combustion 30 et exprimée en fraction volumique, appelée « facteur de méthane », $Y_{O2\ air}$ correspond à la fraction volumique en oxygène dans l'air atmosphérique soit 0,209 (exprimée en fraction volumique) et $\lambda$, dit « lambda volumique », est appelé facteur de dioxygène.

Le facteur de dioxygène $\lambda$ est une donnée propre au module de combustion 30, fournie par le constructeur du module de combustion 30, qui exprime le rapport entre le volume de dioxygène fourni à la combustion d'un volume de méthane et le volume de dioxygène nécessaire à la combustion stœchiométrique du même volume de méthane. Si $\lambda$ = 1 alors la réaction est stœchiométrique, si $\lambda$ > 1 alors il y a excès d'oxygène dans le mélange pour permettre la combustion).

Le module de contrôle 50 est apte à calculer la fraction volumique minimale en méthane admissible par le module de combustion 30 en supposant que l'air comburant ne contient que du dioxygène, notée $Y_{CH4\ mini\ oxycombustion}$, selon la formule suivante :

[Math. 5]

$$Y_{CH4\ mini\ oxycombustion} = \frac{(1 - Y_{inertes})}{(2\lambda \times Y_{inertes} + 1)}$$

La valeur du taux d'enrichissement en dioxygène $Y_{O2\ air\ enric}$ de l'air comburant nécessaire pour compenser une diminution de la fraction volumique de méthane du flux de gaz résiduels F2 est calculée selon la formule suivante :

[Math. 6]

$$Y_{O2\ air\ enrichi} = \frac{2\lambda \times Y_{CH4\ résiduel} \times (Y_{inertes} - 1)}{1 - Y_{inertes} - Y_{CH4\ résiduel} \times (2\lambda + 1)}$$

où $Y_{CH4\ résiduel}$ correspond à la fraction volumique de méthane du flux de gaz résiduels F2 en entrée du module de combustion 30.

Le module de contrôle 50 est apte à envoyer le taux d'enrichissement en dioxygène $Y_{O2\ air\ enrichi}$ calculé au module de fourniture 40 afin que ledit module de fourniture 40 enrichisse un flux d'air atmosphérique F3 prélevé pour qu'il atteigne le taux d'enrichissement en dioxygène ainsi déterminé.

On a représenté à la figure 2 une première forme de réalisation du système selon l'invention. Dans cette première forme de réalisation, l'unité d'épuration 20 comprend un unique étage de membranes connecté fluidiquement au module de combustion 30 pour lui envoyer le flux de gaz résiduels F2. Dans cette configuration, le flux de gaz résiduels F2 comporte par exemple entre 15 et 20 % de méthane.

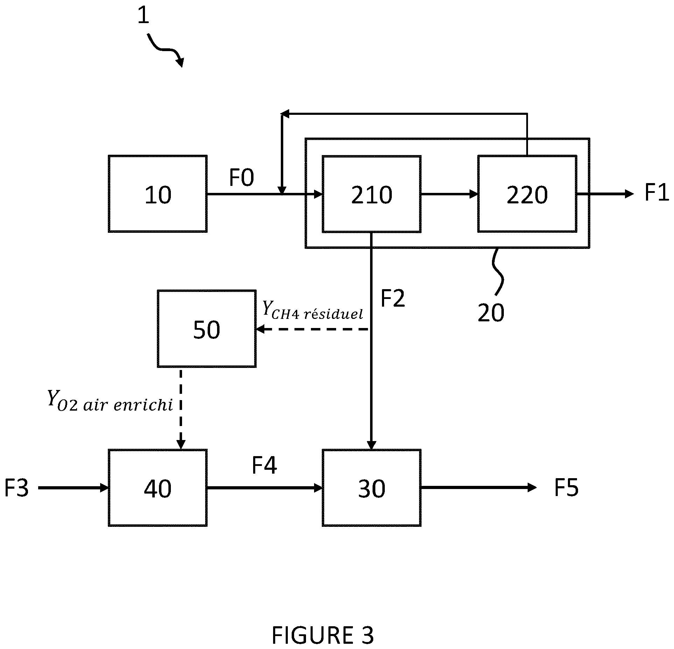

On a représenté à la figure 3 une deuxième forme de réalisation du système selon l'invention. Dans cette deuxième forme de réalisation, l'unité d'épuration 20 comprend un premier étage de membranes 210 connecté fluidiquement au module de combustion 30 afin de lui envoyer le flux de gaz résiduels F2 et un deuxième étage de membranes 220 connecté fluidiquement à l'entrée du premier étage de membranes 210 afin de recycler les perméats issus dudit deuxième étage de membranes 220 et améliorer ainsi le rendement du système 1. Dans cette configuration, le flux de gaz résiduels F2 comporte par exemple entre 10 et 12 % de méthane.

Mise en œuvre

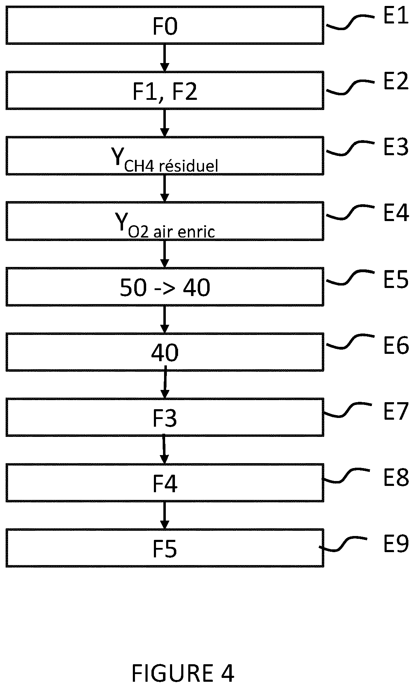

Un exemple de mise en œuvre de l'invention va maintenant être décrit en référence à la figure 4.

Tout d'abord, le module de production 10 fabrique du biogaz qu'il transmet à l'unité d'épuration 20 sous la forme d'un flux F0 dans une étape E1. L'unité d'épuration 20 sépare, dans une étape E2, le biogaz fabriqué par le module de production 10 en un flux de biométhane F1, de préférence contenant au moins 90 % de méthane, et en un flux de gaz résiduels F2 contenant une proportion de méthane, par exemple entre 10 et 30 %. Ce flux de gaz résiduels F2 est acheminé de l'unité d'épuration 20 jusqu'au module de combustion 30.

Ce faisant, le module de contrôle 50 détermine dans une étape E3 la fraction volumique de méthane $Y_{CH4\ résiduel}$ du flux de gaz résiduels F2 circulant entre l'unité d'épuration 20 et le module de combustion 30, par exemple en dérivant une faible fraction du flux de gaz résiduels F2.

Ensuite, dans une étape E4, le module de contrôle 50 calcule le taux d'enrichissement en dioxygène $Y_{O2\ air\ enrichi}$

permettant de réaliser la combustion, par le module de combustion 30, du méthane contenu dans le flux de gaz résiduels F2 à partir de la fraction volumique de méthane $Y_{CH4}$ résiduel du flux de gaz résiduels F2 déterminée à l'étape E2, en respectant le facteur de dioxygène et le facteur de méthane λ caractérisant le module de combustion 30.

Le calcul du taux d'enrichissement en dioxygène $Y_{O2\ air\ enrichi}$ est réalisé en calculant tout d'abord le taux d'inertes maximal $Y_{inertes}$ admissible dans le mélange en entrée du module de combustion 30, qui correspond à la quantité de constituants ne participant pas en tant que réactifs à la réaction de combustion, puis la fraction volumique minimale en méthane admissible par le module de combustion 30 en supposant que l'air comburant ne contient que du dioxygène (oxycombustion à 100 % de dioxygène).

Le taux d'inertes maximal admissible $Y_{inertes}$ est calculé selon la formule suivante :

[Math. 7]

$$Y_{inertes} = \frac{1 + Y_{CH4\ mini\ constructeur} \times \left[2\lambda \times \left(\frac{1 - Y_{O2\ air}}{Y_{O2\ air}}\right) - 1\right]}{1 + 2\lambda \times \left(\frac{Y_{CH4\ mini\ constructeur}}{Y_{O2\ air}}\right)}$$

où $Y_{CH4\ mini\ constructeur}$ est le facteur de méthane, $Y_{O2\ air}$ correspond à la fraction volumique en oxygène dans l'air atmosphérique soit 0,209 (exprimée en fraction volumique) et λ est le facteur de dioxygène.

La fraction volumique minimale en méthane admissible par le module de combustion en supposant que l'air comburant ne contient que du dioxygène $Y_{CH4\ mini\ oxycombustion}$ est calculée selon la formule suivante :

[Math. 8]

$$Y_{CH4\ mini\ oxycombustion} = \frac{(1 - Y_{inertes})}{(2\lambda \times Y_{inertes} + 1)}$$

La valeur du taux d'enrichissement en dioxygène $Y_{O2\ air\ enrichi}$ de l'air comburant nécessaire pour compenser une diminution de la fraction volumique de méthane du flux de gaz résiduels F2 est calculée selon la formule suivante :

[Math. 9]

$$Y_{O2\ air\ enrichi} = \frac{2\lambda \times Y_{CH4\ résiduel} \times (Y_{inertes} - 1)}{1 - Y_{inertes} - Y_{CH4\ résiduel} \times (2\lambda + 1)}$$

où $Y_{CH4}$ résiduel correspond à la fraction volumique de méthane du flux de gaz résiduels F2 en entrée du module de combustion 30.

Le module de contrôle 50 envoie dans une étape E5 la valeur du taux d'enrichissement en dioxygène $Y_{O2\ air\ enrichi}$ calculé, de préférence en temps réel, au module de fourniture 40 qui le reçoit dans une étape E6.

Le module de fourniture 40 prélève un flux d'air atmosphérique F3 lors d'une étape E7 puis l'enrichit en dioxygène de sorte que la proportion en dioxygène du flux d'air atmosphérique F3 prélevé atteigne le taux d'enrichissement en dioxygène déterminé par le module de contrôle 50 en fonction de la fraction volumique de méthane dans le flux de gaz résiduels $Y_{CH4}$ résiduel.

Une fois enrichi au taux d'enrichissement déterminé, le module de fourniture 40 fournit ledit flux d'air enrichi F4 au module de combustion 30 en tant que comburant dans une étape E8 afin qu'il réalise la combustion du flux de gaz résiduels F2, qui constitue le carburant (ou combustible), et brûler ainsi le méthane contenu dans le flux de gaz résiduels F2 afin d'en limiter la proportion à une valeur très faible, à l'état de traces, notamment moins de 0,2 % du total des gaz sortant du module de combustion 30 après combustion.

Cet enrichissement peut par exemple être réalisé par séparation membranaire, par une méthode de type PSA ou VPSA ou bien par une dilution d'un flux de dioxygène pur dans un flux d'air ambiant.

Les gaz issus de la combustion ainsi assainis sont ensuite évacués du module de combustion 30 vers l'atmosphère dans un flux F5 avec une teneur en méthane inférieure à une valeur normée prédéterminée, par exemple 0,2 %, lors d'une étape E9.

Exemple numérique

Un exemple de calcul va maintenant être donné à titre explicatif. Pour un moteur de cogénération biogaz fonctionnant avec une fraction volumique minimale de méthane de 40 % dans le biogaz (donnée constructeur) et un facteur de dioxygène (appelé lambda) de 1,4 (donnée constructeur), les valeurs calculées au moyen de la méthodologie et des formules présentées précédemment sont les suivantes :

[Table 1]

| | | |
|---|---|---|
| $Y_{CH4mini\ constructeur}$ : fraction volumique en méthane dans le biogaz en entrée du module de combustion | Donnée constructeur | 0,4 (40% CH4 mini dans le biogaz entrée moteur) |
| • Facteur de dioxygène $\lambda$ (lambda volumique caractérisant l'excès d'air) | Donnée constructeur | 1,4 |
| $Y_{inertes}$ : fraction volumique maximale d'inertes admissible dans le mélange en entrée de l'équipement de combustion | Formule [Math. 1] | 0,761 (76,1 % vol. maximum d'inertes CO2+N2 dans le mélange biogaz + air comburant en entrée du module de combustion |
| $Y_{CH4\ mini\ oxycombustion}$ | Formule [Math. 2] | 0,0764 7,64% vol. CH4 mini acceptable dans le cas d'une oxycombustion à 100% d'O2 |

Le calcul du taux d'enrichissement en dioxygène (O$_2$) du flux d'air comburant selon la formule [Math. 3] est donné ci-après dans la Table 2 pour différentes teneurs en méthane dans les gaz résiduels de l'unité d'épuration 20 :

[Table 2]

| $Y_{CH4\ résiduel}$ Teneur en CH4 dans le gaz résiduel issu de l'unité d'épuration du biogaz (%vol.) | 7,64% $Y_{CH4\ mini\ oxy\ combustion}$ | 10,0% | 15,0% | 20,0% | 25,0% | 30,0% | 35,0% | 40,0% |
|---|---|---|---|---|---|---|---|---|
| $Y_{O2\ air\ enrichi}$ [3] Teneur en O2 dans l'air enrichi (% vol.) | 100,0% Oxygène pur | 47,5% | 30,3% | 25,7% | 23,5% | 22,3% | 21,5% | 20,9% Air atmosphère |

Ainsi selon ces calculs, à titre d'exemple :

- si l'unité d'épuration 20 du biogaz produit un flux de gaz résiduels F2 à 35% en volume de méthane, il faudra produire un air enrichi à 21,5% de dioxygène pour permettre sa valorisation dans le module de combustion 30 (c'est-à-dire la combustion totale du méthane des gaz résiduels, à l'exception de quelques traces dans les fumées de combustion),

- si l'unité d'épuration 20 du biogaz produit un flux de gaz résiduels F2 à 15% en volume de méthane, il faudra produire un air enrichi à 30% de dioxygène pour permettre sa valorisation dans le module de combustion 30,

- si l'unité d'épuration 20 du biogaz produit un flux de gaz résiduels F2 à 7,64% en volume de méthane, il faudra produire un air enrichi à 100% de dioxygène (flux de dioxygène pur) pour permettre sa valorisation dans le module de combustion 30.

Si l'unité d'épuration 20 du biogaz produit un flux de gaz résiduels F2 à 40% ou plus en volume de méthane, il n'est pas nécessaire d'enrichir l'air pour permettre sa valorisation dans le module de combustion 30.
En résumé, si l'unité d'épuration 20 du biogaz produit un flux de gaz résiduels F2 à une valeur comprise entre 7,64% et 40% en volume de méthane, il est nécessaire d'enrichir l'air au taux d'enrichissement calculé par la formule [Math. 3] pour permettre sa valorisation dans le module de combustion 30.

Si l'unité d'épuration 20 du biogaz produit un flux de gaz résiduels F2 à moins de 7,64% en volume de méthane, il faudra produire un air enrichi à 100% de dioxygène (flux de dioxygène pur) pour permettre sa valorisation dans le module de combustion 30 mais les gaz résiduels ne seront pas brûlés entièrement et du méthane pourrait être rejeté dans l'atmosphère.

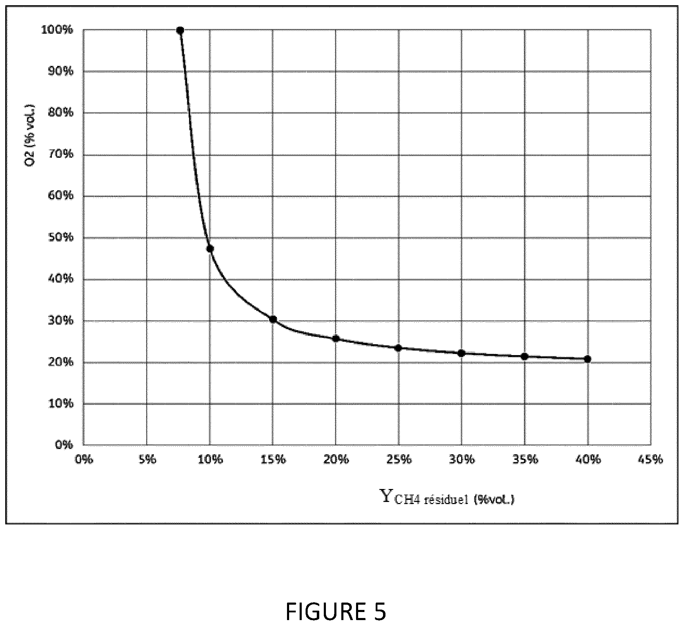

On a représenté à la figure 5 l'évolution de la teneur en dioxygène dans l'air comburant en entrée du module de combustion 30 en fonction de la teneur en méthane dans les gaz résiduels issus de l'unité d'épuration 20 de biogaz (facteur de méthane = 40 % vol., facteur de dioxygène Lambda = 1,4). Cette courbe peut être stockée et utilisée par le module de contrôle 50 pour calculer le taux d'enrichissement en dioxygène.

L'invention permet donc d'optimiser la combustion des gaz résiduel en fonction de leur proportion de méthane en injectant la quantité nécessaire mais suffisante de dioxygène pour permettre une combustion efficace limitant la proportion résiduelle de méthane en sortie de combustion à une valeur conforme aux normes en vigueur. En pratique, la combustion du méthane des gaz résiduels est quasi complète, il ne reste que d'infimes traces de méthane dans les fumées de combustion.

**Revendications**

1. Système (1) de production de biométhane comportant :

   - au moins un module de production (10) de biogaz (F0),
   - au moins une unité d'épuration (20) apte à séparer le flux de biogaz provenant de l'au moins un module de production (10) de biogaz en un flux de biométhane (F1) et un flux de gaz résiduels (F2) contenant une proportion de méthane,
   - au moins un module de combustion (30) des gaz résiduels caractérisé, d'une part, par un facteur dit « de méthane » ($Y_{CH4\ mini\ constructeur}$) indiquant la fraction volumique minimale de méthane que doit contenir ledit flux de gaz résiduels (F2) pour permettre la combustion du méthane qu'il contient et, d'autre part, par un facteur dit « de dioxygène » ($\lambda$) indiquant la quantité minimum de dioxygène à apporter pour pouvoir brûler lesdits gaz résiduels,
   - au moins un module de fourniture (40) apte à fournir un flux gazeux comportant du dioxygène à l'au moins un module de combustion (30) des gaz résiduels,

   ledit système (1) étant **caractérisé en ce que** :

   - il comprend un module de contrôle (50) apte à déterminer la fraction volumique de méthane ($Y_{CH4\ résiduel}$) du flux de gaz résiduels (F2), à calculer un taux d'enrichissement en dioxygène ($Y_{O2\ air\ enrichi}$) d'un flux d'air (F3) permettant de réaliser la combustion du méthane contenu dans lesdits gaz résiduels dans le module de combustion (30) à partir de la fraction volumique de méthane ($Y_{CH4\ résiduel}$) du flux de gaz résiduels (F2) déterminée en respectant le facteur de dioxygène ($\lambda$) et le facteur de méthane ($Y_{CH4\ mini\ constructeur}$) du module de combustion (30), et à envoyer le taux d'enrichissement en dioxygène ($Y_{O2\ air\ enrichi}$) calculé à l'au moins un module de fourniture (40),
   - l'au moins un module de fourniture (40) est apte à générer un flux gazeux (F4) comportant une proportion de dioxygène égale au taux d'enrichissement en dioxygène ($Y_{O2\ air\ enrichi}$) reçu du module de contrôle (50).

2. Système (1) selon la revendication 1, dans lequel, afin de générer le flux gazeux comportant du dioxygène à la valeur du taux d'enrichissement en dioxygène ($Y_{O2\ air\ enrichi}$), le module de fourniture (40) est apte à prélever un flux d'air atmosphérique (F0) et à enrichir ledit flux d'air en dioxygène à la valeur du taux d'enrichissement en dioxygène ($Y_{O2\ air\ enrichi}$) reçu.

3. Système (1) selon la revendication précédente, dans lequel le module de fourniture (40) est apte à enrichir le flux d'air atmosphérique (F3) en dioxygène par séparation membranaire.

4. Système (1) selon la revendication précédente, dans lequel le module de fourniture (40) est apte à extraire sous vide les perméats enrichis en dioxygène lors de la séparation membranaire.

5. Système (1) selon la revendication 2, dans lequel le module de fourniture (40) est apte à enrichir le flux d'air atmosphérique (F3) en dioxygène par adsorption.

6. Système (1) selon la revendication précédente, dans lequel l'adsorption est réalisée par un module de type PSA ou VPSA.

7. Système (1) selon la revendication 2, dans lequel, le module de fourniture (40) est apte à calculer une quantité de dioxygène à partir du taux d'enrichissement en dioxygène ($Y_{O2\ air\ enrichi}$) reçu, à prélever la quantité de dioxygène calculée dans un conduit de fourniture de dioxygène pur et à diluer la quantité de dioxygène prélevée dans le flux d'air atmosphérique (F0) afin d'obtenir le flux d'air enrichi au taux d'enrichissement en dioxygène ($Y_{O2\ air\ enrichi}$).

8. Procédé de traitement des gaz résiduels issus de l'épuration du méthane à partir d'un système (1) selon l'une quelconque des revendications précédentes, ledit procédé comprenant les étapes de :

- production de biogaz par l'au moins un module de production (10),
- séparation, par l'au moins une unité d'épuration (20), du biogaz produit en un flux de biométhane (F1) et en un flux de gaz résiduels (F2) contenant une proportion de méthane,
- détermination par le module de contrôle (50) de la fraction volumique de méthane ($Y_{CH4\ résiduel}$) du flux de gaz résiduels (F2)
- calcul par le module de contrôle (50) du taux d'enrichissement en dioxygène ($Y_{O2\ air\ enrichi}$) d'un flux d'air atmosphérique (F3) permettant de réaliser la combustion du méthane contenu dans lesdits gaz résiduels dans le module de combustion (30) à partir de la fraction volumique de méthane du flux de gaz résiduels ($Y_{CH4\ résiduel}$) déterminée en respectant le facteur de dioxygène ($\lambda$) et le facteur de méthane ($Y_{CH4\ mini\ constructeur}$) du module de combustion (30),
- envoi par le module de contrôle (50) du taux d'enrichissement en dioxygène ($Y_{O2\ air\ enrichi}$) calculé à l'au moins un module de fourniture (40),
- génération par l'au moins un module de fourniture (40) d'un flux gazeux (F4) comportant une proportion de dioxygène égale au taux d'enrichissement en dioxygène ($Y_{O2\ air\ enrichi}$) reçu,
- fourniture par l'au moins un module de fourniture (40) du flux gazeux généré au module de combustion (30), et
- combustion, par le module de combustion (30), du flux de gaz résiduels à partir du flux gazeux fourni.

9. Procédé selon la revendication précédente, dans lequel le calcul du taux d'enrichissement en dioxygène ($Y_{O2\ air\ enrichi}$) est réalisé en calculant tout d'abord le taux d'inertes maximal admissible ($Y_{inertes}$) dans le mélange en entrée du module de combustion (30), puis la fraction volumique minimale de méthane ($Y_{CH4\ mini\ constructeur}$) admissible par le module de combustion (30) en supposant que l'air comburant ne contient que du dioxygène.

10. Procédé selon la revendication précédente, dans lequel le taux d'inertes maximal admissible ($Y_{inertes}$) est calculé selon la formule suivante :

[Math. 10]
$$Y_{inertes} = \frac{1 + Y_{CH4\ mini\ constructeur} \times \left[ 2\lambda \times \left( \frac{1 - Y_{O2\ air}}{Y_{O2\ air}} \right) - 1 \right]}{1 + 2\lambda \times \left( \frac{Y_{CH4\ mini\ constructeur}}{Y_{O2\ air}} \right)}$$

où $Y_{CH4\ mini\ constructeur}$ est le facteur de méthane, $Y_{O2\ air}$ correspond à la fraction volumique en dioxygène dans l'air atmosphérique, soit 0,209, et $\lambda$ est le facteur de dioxygène,
dans lequel la fraction volumique minimale en méthane admissible par le module de combustion (30) en supposant que l'air comburant ne contient que du dioxygène ($Y_{CH4\ mini\ oxycombustion}$) est calculée selon la formule suivante :

[Math. 11]
$$Y_{CH4\ mini\ oxycombustion} = \frac{(1 - Y_{inertes})}{(2\lambda \times Y_{inertes} + 1)}$$

et dans lequel la valeur du taux d'enrichissement en dioxygène ($Y_{O2\ air\ enrichi}$) de l'air comburant nécessaire pour brûler le méthane ($Y_{CH4\ résiduel}$) du flux de gaz résiduels (F2) est calculée selon la formule suivante :

[Math. 12]

$$Y_{O2\,air\,enrichi} = \frac{2\lambda \times Y_{CH4\,résiduel} \times (Y_{inertes} - 1)}{1 - Y_{inertes} - Y_{CH4\,résiduel} \times (2\lambda + 1)}$$

où $Y_{CH4}$ résiduel correspond à la fraction volumique de méthane du flux de gaz résiduels en entrée du module de combustion (30).

**Patentansprüche**

1.  System (1) zur Produktion von Biomethan, aufweisend:

    - mindestens ein Modul zur Produktion (10) von Biogas (F0),
    - mindestens eine Reinigungseinheit (20), die imstande ist, den von dem mindestens einen Modul zur Produktion (10) von Biogas kommenden Biogasstrom in einen Biomethanstrom (F1) und in einen Restgasstrom (F2) zu trennen, der einen Methananteil enthält,
    - mindestens ein Verbrennungsmodul (30) der Restgase, das zum einen durch einen als "Methanfaktor" bezeichneten Faktor ($Y_{CH4\,mini\,Hersteller}$), der den minimalen Volumenanteil Methan angibt, den der Restgasstrom (F2) enthalten muss, um die Verbrennung des Methans zu gestatten, das er enthält, und zum anderen durch einen als "Sauerstofffaktor" bezeichneten Faktor ($\lambda$), der die Mindestmenge Sauerstoff angibt, die zuzuführen ist, um die Restgase verbrennen zu können, gekennzeichnet ist,
    - mindestens ein Bereitstellungsmodul (40), das imstande ist, dem mindestens einen Verbrennungsmodul (30) der Restgase einen Sauerstoff aufweisenden Gasstrom bereitzustellen,

    wobei das System (1) **dadurch gekennzeichnet ist, dass**:

    - es ein Steuermodul (50) umfasst, das imstande ist, den Volumenanteil Methan ($Y_{CH4\,Rest}$) des Restgasstroms (F2) zu bestimmen, einen Anreicherungsgrad mit Sauerstoff ($Y_{O2\,angereicherte\,Luft}$) eines Luftstroms (F3) zu berechnen, der erlaubt, die Verbrennung des in den Restgasen enthaltenen Methans ausgehend vom Volumenanteil Methan ($Y_{CH4\,Rest}$) im Restgasstrom (F2), der unter Beachtung des Sauerstofffaktors ($\lambda$) und des Methanfaktors ($Y_{CH4}$ mini Hersteller) des Verbrennungsmoduls (30) bestimmt wurde, im Verbrennungsmodul (30) durchzuführen und den berechneten Anreicherungsgrad mit Sauerstoff ($Y_{O2\,angereicherte\,Luft}$) an mindestens ein Bereitstellungsmodul (40) zu senden,
    - das mindestens eine Bereitstellungsmodul (40) imstande ist, einen Gasstrom (F4) zu erzeugen, der einen Anteil Sauerstoff aufweist, der gleich dem vom Steuermodul (50) empfangenen Anreicherungsgrad mit Sauerstoff ($Y_{O2\,angereicherte\,Luft}$) ist.

2.  System (1) nach Anspruch 1, wobei das Bereitstellungsmodul (40), um den Gasstrom zu erzeugen, der Sauerstoff im Wert des Anreicherungsgrads mit Sauerstoff ($Y_{O2\,angereicherte\,Luft}$) aufweist, imstande ist, einen atmosphärischen Luftstrom (F0) zu entnehmen und den Luftstrom mit Sauerstoff im Wert des erhaltenen Anreicherungsgrads mit Sauerstoff ($Y_{O2\,angereicherte\,Luft}$) anzureichern.

3.  System (1) nach vorangehendem Anspruch, wobei das Bereitstellungsmodul (40) imstande ist, den atmosphärischen Luftstrom (F3) mit Sauerstoff durch Membrantrennung anzureichern.

4.  System (1) nach vorangehendem Anspruch, wobei das Bereitstellungsmodul (40) imstande ist, die mit Sauerstoff bei der Membrantrennung angereicherten Permeate im Vakuum zu extrahieren.

5.  System (1) nach Anspruch 2, wobei das Bereitstellungsmodul (40) imstande ist, den atmosphärischen Luftstrom (F3) mit Sauerstoff durch Adsorption anzureichern.

6.  System (1) nach vorangehendem Anspruch, wobei die Adsorption von einem Modul vom Typ PSA oder VPSA durchgeführt wird.

7.  System (1) nach Anspruch 2, wobei das Bereitstellungsmodul (40) imstande ist, eine Menge Sauerstoff ausgehend vom erhaltenen Anreicherungsgrad mit Sauerstoff ($Y_{O2\,angereicherte\,Luft}$) zu berechnen, die berechnete Menge Sauerstoff aus einer Leitung zur Bereitstellung von reinem Sauerstoff zu entnehmen und die entnommene Menge Sauerstoff im atmosphärischen Luftstrom (F0) zu verdünnen, um den Strom angereicherter Luft mit dem Anreicherungsgrad mit Sauerstoff ($Y_{O2\ angereicherte\ Luft}$) zu erhalten.

8. Verfahren zur Behandlung der Restgase, die aus der Methanreinigung hervorgegangen sind, mit einem System (1) nach einem der vorangehenden Ansprüche, wobei das Verfahren die folgenden Schritte umfasst:

- Produzieren von Biogas durch mindestens ein Produktionsmodul (10),
- Trennen, durch mindestens eine Reinigungseinheit (20), des produzierten Biogases in einen Biomethanstrom (F1) und in einen Restgasstrom (F2), der einen Methananteil enthält,
- Bestimmen, durch das Steuermodul (50), des Volumenanteils Methan ($Y_{CH4\ Rest}$) im Restgasstrom (F2),
- Berechnen, durch das Steuermodul (50), des Anreicherungsgrads mit Sauerstoff ($Y_{O2\ angereicherte\ Luft}$) eines atmosphärischen Luftstroms (F3), der erlaubt, die Verbrennung des in den Restgasen enthaltenen Methans im Verbrennungsmodul (30) durchzuführen, ausgehend vom Volumenanteil Methan im Restgasstrom ($Y_{CH4\ Rest}$), der unter Beachtung des Sauerstofffaktors ($\lambda$) und des Methanfaktors ($Y_{CH4\ mini\ Hersteller}$) des Verbrennungsmoduls (30) bestimmt wurde,
- Senden, durch das Steuermodul (50), des berechneten Anreicherungsgrads mit Sauerstoff ($Y_{O2\ angereicherte\ Luft}$) an das mindestens eine Bereitstellungsmodul (40),
- Erzeugen, durch das mindestens eine Bereitstellungsmodul (40), eines Gasstroms (F4), der einen Anteil Sauerstoff aufweist, der gleich dem vom Steuermodul (50) empfangenen Anreicherungsgrad mit Sauerstoff ($Y_{O2\ angereicherte\ Luft}$) ist,
- Bereitstellen, durch das mindestens eine Bereitstellungsmodul (40), des erzeugten Gasstroms für das Verbrennungsmodul (30), und
- Verbrennen, durch das Verbrennungsmodul (30), des Restgasstroms ausgehend vom bereitgestellten Gasstrom.

9. Verfahren nach vorangehendem Anspruch, wobei die Berechnung des Anreicherungsgrads mit Sauerstoff ($Y_{O2\ angereicherte\ Luft}$) durch Berechnung zunächst des maximal zulässigen Gehalts an Inerten ($Y_{Inerte}$) im Gemisch am Einlass des Verbrennungsmoduls (30), dann des durch das Verbrennungsmodul (30) zulässigen minimalen Volumenanteils Methan ($Y_{CH4\ mini\ Hersteller}$) unter der Voraussetzung, dass die Verbrennungsluft nur Sauerstoff enthält, durchgeführt wird.

10. Verfahren nach vorangehendem Anspruch, wobei der maximal zulässige Gehalt an Inerten ($Y_{Inerte}$) gemäß der folgenden Formel berechnet wird:

[Math. 10]

$$Y_{Inerte} = \frac{1 + Y_{CH4\ mini\ Hersteller}\ x\left[2\lambda\ x\left(\frac{1-Y_{O2\ Luft}}{Y_{O2\ Luft}}\right)-1\right]}{1 + 2\lambda\ x\left(\frac{Y_{CH4\ mini\ Hersteller}}{Y_{O2\ Luft}}\right)}$$

wobei $Y_{CH4\ mini\ Hersteller}$ der Methanfaktor ist, $Y_{O2\ Luft}$ dem Volumenanteil Sauerstoff in der atmosphärischen Luft entspricht, das heißt 0,209, und $\lambda$ der Sauerstofffaktor ist,
wobei der durch das Verbrennungsmodul (30) zulässige minimale Volumenanteil Methan unter der Voraussetzung, dass die Verbrennungsluft nur Sauerstoff ($Y_{CH4\ mini\ Sauerstoffverbrennung}$) enthält, gemäß der folgenden Formel berechnet wird:

[Math. 11]

$$Y_{CH4\ mini\ Sauerstoffverbrennung} = \frac{(1 - Y_{Inerte})}{(2\lambda\ x\ Y_{Inerte} + 1)}$$

und wobei der Wert des Anreicherungsgrads mit Sauerstoff ($Y_{O2\ angereicherte\ Luft}$) der Verbrennungsluft, der notwendig ist, um das Methan ($Y_{CH4\ Rest}$) im Restgasstrom (F2) zu verbrennen, gemäß der folgenden Formel berechnet wird:

[Math. 12]

$$Y_{O2\ angereicherte\ Luft} = \frac{2\lambda\ x\ Y_{CH4\ Rest}\ x\ (Y_{Inerte} - 1)}{1 - Y_{Inerte} - Y_{CH4\ Rest}\ x\ (2\lambda + 1)}$$

wobei $Y_{CH4\ Rest}$ dem Volumenanteil Methan im Restgasstrom am Einlass in das Verbrennungsmodul (30) entspricht.

**Claims**

1. A system (1) for producing biomethane comprising:

    - at least one module (10) for producing biogas (F0),
    - at least one scrubbing unit (20) capable of separating the biogas stream coming from the at least one module (10) for producing biogas into a stream of biomethane (F1) and a stream of residual gases (F2) containing a proportion of methane,
    - at least one module (30) for combusting residual gases characterised, on the one hand, by a so-called "methane" factor ($Y_{CH4\ mini\ manufacturer}$) denoting the minimum volume fraction of methane that said stream of residual gases (F2) has to contain to allow combustion of methane it contains and, on the other hand, by a so-called "dioxygen" factor ($\lambda$) denoting the minimum amount of dioxygen to be fed to be able to burn said residual gases,
    - at least one supply module (40) capable of supplying a gaseous stream comprising dioxygen to the at least one module (30) for combusting residual gases,

    said system (1) being **characterised in that**:

    - it comprises a control module (50) capable of determining the volume fraction of methane ($Y_{residual\ CH4}$) of the stream of residual gases (F2), of calculating a dioxygen-enrichment rate ($Y_{O2\ enriched\ air}$) of an air stream (F3) for performing combustion of methane contained in said residual gases in the combustion module (30) from the volume fraction of methane ($Y_{residual\ CH4}$) of the stream of residual gases (F2) determined by respecting the dioxygen factor ($\lambda$) and the methane factor ($Y_{CH4\ mini\ manufacturer}$) of the combustion module (30), and of sending the dioxygen-enrichment rate ($Y_{O2\ enriched\ air}$) calculated to the at least one supply module (40),
    - the at least one supply module (40) is capable of generating a gaseous stream (F4) comprising a proportion of dioxygen equal to the dioxygen-enrichment rate ($Y_{O2\ enriched\ air}$) received from the control module (50).

2. The system (1) according to claim 1, wherein, in order to generate the gaseous stream comprising dioxygen at the value of the dioxygen-enrichment rate ($Y_{O2\ enriched\ air}$), the supply module (40) is capable of taking a stream of ambient air (F0) and of enriching said air stream with dioxygen at the value of the dioxygen-enrichment rate ($Y_{O2\ enriched\ air}$) received.

3. The system (1) according to the previous claim, wherein the supply module (40) is capable of enriching the stream of ambient air (F3) with dioxygen by membrane separation.

4. The system (1) according to the previous claim, wherein the supply module (40) is capable of vacuum extracting dioxygen-enriched permeates during membrane separation.

5. The system (1) according to claim 2, wherein the supply module (40) is capable of enriching the stream of ambient air (F3) with dioxygen by adsorption.

6. The system (1) according to the previous claim, wherein the adsorption is performed by a PSA or VPSA type module.

7. The system (1) according to claim 2, wherein, the supply module (40) is capable of calculating a dioxygen amount from the dioxygen-enrichment rate ($Y_{O2\ enriched\ air}$) received, of taking the dioxygen amount calculated from a pure dioxygen supply duct and of diluting the dioxygen amount taken from the stream of ambient air (F0) in order to obtain the enriched air stream at the dioxygen-enrichment rate ($Y_{O2\ enriched\ air}$).

8. A method for treating residual gases from scrubbing of methane from a system (1) according to any of the previous claims, said method comprising the steps of:

- producing, by the at least one production module (10), biogas,
- separating, by the at least one scrubbing unit (20), biogas produced into a stream of biomethane (F1) and into a stream of residual gases (F2) containing a proportion of methane,
- determining, by the control module (50), the volume fraction of methane ($Y_{residual\ CH4}$) of the stream of residual gases (F2),
- calculating, by the control module (50), the dioxygen-enrichment rate ($Y_{O2\ enriched\ air}$) of a stream of ambient air (F3) for performing combustion of methane contained in said residual gases in the combustion module (30) from the volume fraction of methane of the stream of residual gases ($Y_{residual\ CH4}$) determined by respecting the dioxygen factor ($\lambda$) and the methane factor ($Y_{CH4\ mini\ manufacturer}$) of the combustion module (30),
- sending, by the control module (50), the dioxygen-enrichment rate ($Y_{O2\ enriched\ air}$) calculated to the at least one supply module (40),
- generating, by the at least one supply module (40), a gaseous stream (F4) comprising a proportion of dioxygen equal to the dioxygen-enrichment rate ($Y_{O2\ enriched\ air}$) received,
- supplying, by the at least one supply module (40), the gaseous stream generated to the combustion module (30), and
- combusting, by the combustion module (30), the stream of residual gases from the gaseous stream supplied.

9. The method according to the previous claim, wherein calculating the dioxygen-enrichment rate ($Y_{O2\ enriched\ air}$) is performed by first calculating the maximum allowable inerts rate ($Y_{inerts}$) in the mixture at the inlet of the combustion module (30), and then the minimum allowable volume fraction of methane ($Y_{CH4\ mini\ manufacturer}$) by the combustion module (30) assuming that the oxidising air contains dioxygen only.

10. The method according to the previous claim, wherein the maximum allowable inerts rate ($Y_{inerts}$) is calculated according to the following formula:

[Math. 10]

$$Y_{inerts} = \frac{1 + Y_{CH4\ mini\ manufacturer} \times \left| 2\lambda \times \left(\frac{1 - Y_{O2\ air}}{Y_{O2\ air}}\right) - 1 \right|}{1 + 2\lambda \times \left(\frac{Y_{CH4\ mini\ manufacturer}}{Y_{O2\ air}}\right)}$$

where $Y_{CH4\ mini\ manufacturer}$ is the methane factor, $Y_{O2\ air}$ corresponds to the dioxygen volume fraction in ambient air, that is 0.209, and $\lambda$ is the dioxygen factor,
wherein the minimum allowable methane volume fraction by the combustion module (30) assuming that the oxidising air only contains dioxygen ($Y_{CH4\ mini\ oxycombustion}$) is calculated according to the following formula:

[Math. 11]

$$Y_{CH4\ mini\ oxycombustion} = \frac{(1 - Y_{inerts})}{(2\lambda \times Y_{inerts} + 1)}$$

and wherein the value of the dioxygen-enrichment rate ($Y_{O2\ enriched\ air}$) of oxidising air necessary to burn methane ($Y_{residual\ CH4}$) of the stream of residual gases (F2) is calculated according to the following formula:

[Math. 12]

$$Y_{O2\ enriched\ air} = \frac{2\lambda \times Y_{residual\ CH4} \times (Y_{inerts} - 1)}{1 - Y_{inerts} - Y_{residual\ CH4} \times (2\lambda + 1)}$$

where $Y_{residual\ CH4}$ corresponds to the volume fraction of methane of the stream of residual gases at the inlet of the combustion module (30).

FIGURE 1

FIGURE 2

1

10    F0    210    220    F1

F2

20

$Y_{CH4\ résiduel}$

50

$Y_{O2\ air\ enrichi}$

F3    40    F4    30    F5

FIGURE 3

```
                                        ┌──────────────────────────────┐
                                        │             F0               │ ⌇ E1
                                        └──────────────────────────────┘
                                                       │
                                                       ▼
                                        ┌──────────────────────────────┐
                                        │           F1, F2             │ ⌇ E2
                                        └──────────────────────────────┘
                                                       │
                                                       ▼
                                        ┌──────────────────────────────┐
                                        │       Y_CH4 résiduel         │ ⌇ E3
                                        └──────────────────────────────┘
                                                       │
                                                       ▼
                                        ┌──────────────────────────────┐
                                        │       Y_O2 air enric         │ ⌇ E4
                                        └──────────────────────────────┘
                                                       │
                                                       ▼
                                        ┌──────────────────────────────┐
                                        │          50 -> 40            │ ⌇ E5
                                        └──────────────────────────────┘
                                                       │
                                                       ▼
                                        ┌──────────────────────────────┐
                                        │             40               │ ⌇ E6
                                        └──────────────────────────────┘
                                                       │
                                                       ▼
                                        ┌──────────────────────────────┐
                                        │             F3               │ ⌇ E7
                                        └──────────────────────────────┘
                                                       │
                                                       ▼
                                        ┌──────────────────────────────┐
                                        │             F4               │ ⌇ E8
                                        └──────────────────────────────┘
                                                       │
                                                       ▼
                                        ┌──────────────────────────────┐
                                        │             F5               │ ⌇ E9
                                        └──────────────────────────────┘
```

FIGURE 4

FIGURE 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010006649
- DE A1